# EUROPEAN PATENT APPLICATION

(11) **EP 1 136 928 A2**
(43) Date of publication of application: **26.09.2001**
(21) Application number: 01106125.6
(22) Date of filing: 13.03.2001
(51) Int. Cl.: G06F 17/60

(54) **Integrated control system for information on machinery and materials**

(30) Priority: 14.03.2000 JP 2000071229
(71) Applicant: Sumitomo Corporation, Osaka-shi, Osaka 540-8666 (JP)
(72) Inventor: Tarumi, Masayuki, Nishinomiya-shi, Hyogo 662-0813 (JP); Fuchigami, Toshiyuki, Kyoto-shi, Kyoto 603-8225 (JP); Yoshida, Minoru, Ibaraki-shi, Osaka 567-0826 (JP)
(74) Representative: Glawe, Delfs, Moll & Partner

(57) **Abstract**

The present invention provides a control system for information on machinery and materials which greatly reduces control operations by such as contractors and machinery and materials manufacturers regarding control of information on machinery and materials in construction works, and enables to carry out the construction works at a low cost, and further, enables quick and consistent order and delivery. The integrated control system for information on machinery and materials is a system by which a machinery and materials controller in construction works performs integrated control of information on machinery and materials, wherein: the integrated control is performed by integrated machinery and materials information control equipment; and the equipment enables the machinery and materials controller to receive and/or provide information on orders, delivery, stock and shipment of machinery and materials, and further, to specify the placement of orders for and delivery of machinery and materials.

## Description

### BACKGROUND OF THE INVENTION

### A. TECHNICAL FIELD

The present invention relates to an integrated control system for information on machinery and materials.

### B. BACKGROUND ART

When cellular phone radio stations etc. are constructed, it is conventional for a contractor thereof to carry out most of controls on machinery and materials in ordering and delivering the machinery and materials or in constructing individually with a machinery and materials manufacturer or a constructor, and / or, to consign most of controls on machinery and materials to the machinery and materials manufacturer and the constructor by paying considerable expenses thereto.

For specific example, there are the following cases: case 1 as shown in Fig. 2 where the contractor himself carries out the controls on machinery and materials individually with the machinery and materials manufacturer or the constructor; case 2 as shown in Fig. 3 where the contractor makes the constructor perform the controls on machinery and materials by paying considerable expenses to the constructor; and case 3 as shown in Fig. 4 where the contractor makes both the machinery and materials manufacturer and the constructor perform proportional controls to the paying below on machinery and materials by paying expenses to both of them.

However, in the case of the conventional system, plural related organization (contractor, machinery and materials manufacturer, constructor, etc.) need independently to keep on performing controls of much information on machinery and materials, therefore the controls have been complicated. And to simplify the controls, the contractor is obliged to bear paying a lot of expense.

Moreover, in the case where it is necessary to prepare many kinds of machinery and materials, orders are generally placed with plural machinery and materials manufacturers, and, the more the number of the machinery and materials manufacturers which is ordered increases, the more the controls of ordering or delivering machinery and materials are complicated in plural related organization. Moreover, in the case where orders are placed with plural machinery and materials manufacturers, the appointed date of delivery of machinery and materials generally varies at every manufacturer which receive orders, therefore the controls of delivering machinery and materials are complicated and burdened in plural related organization.

### SUMMARY OF THE INVENTION

### A. OBJECT OF THE INVENTION

An object of the present invention is to provide an integrated control system for information on machinery and materials which greatly reduces operations of controls for information on machinery and materials and enables quickly and consistently to order and delivery, in organization such as contractors, machinery and materials manufacturers, and constructors, about controls for information on machinery and materials in construction works.

### B. DISCLOSURE OF THE INVENTION

The present inventors studied and studied with encouragement to themselves and great efforts to solve the above problems. As a result, the inventors completed the present invention by organizing a machinery and materials controller independently of the contractors, the machinery and materials manufacturers, the constructors, etc., and performing integrated control for information on machinery and materials in the machinery and materials controller, and receiving and providing the information on machinery and materials between the machinery and materials controller and the contractor, etc. (the machinery and materials manufacturers, the constructor) in real time.

Thus, an integrated control system for information on machinery and materials by which a machinery and materials controller performs integrated control for information on machinery and materials in construction works, wherein:
the integrated control is performed by an integrated machinery and materials information control equipment; and
the machinery and materials controller can receive and/or provide information on orders, delivery, stock and shipment of machinery and materials, and specify the placement of orders for and delivery of machinery and materials, by means of said equipment.

In addition, an integrated control system for information on machinery and materials by which a machinery and materials controller performs integrated control for information on machinery and materials in construction works, wherein:
the machinery and materials controller can receive and/or provide information on orders, delivery, stock and shipment of machinery and materials, and further, specifies the placement of orders for and delivery of machinery and materials.

These and other objects and the advantages of the present invention will be more fully apparent from the following detailed disclosure.

### BRIEF DESCRIPTION OF THE DRAWINGS

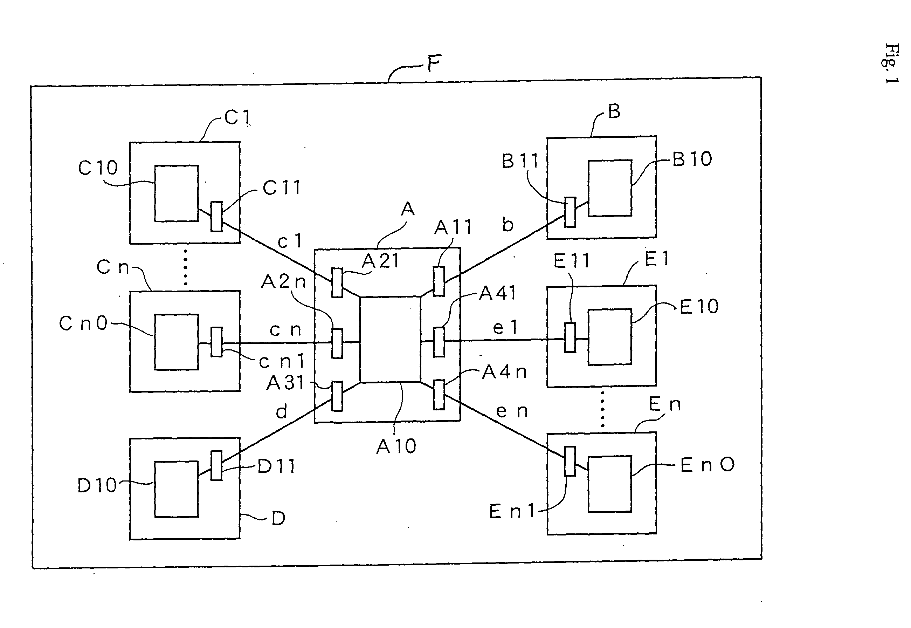

Fig. 1 is a block diagram of an integrated control system for information on machinery and materials according to the present invention.

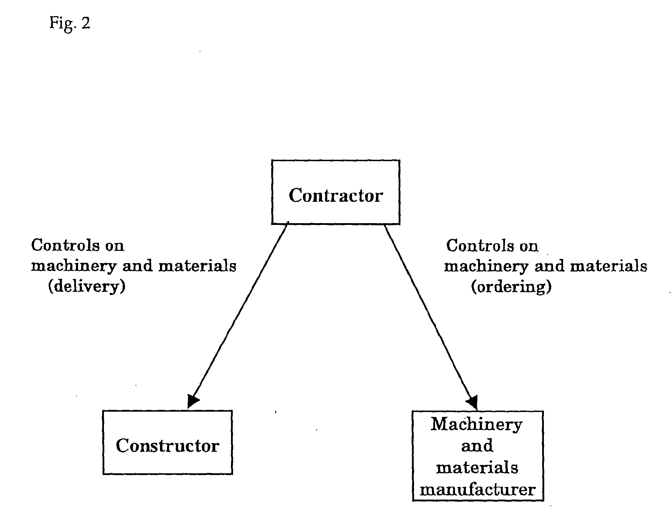

Fig. 2 is a conceptual diagram to illustrate a case where a contractor himself carries out the controls on machinery and materials individually with a machinery and materials manufacturer and a constructor.

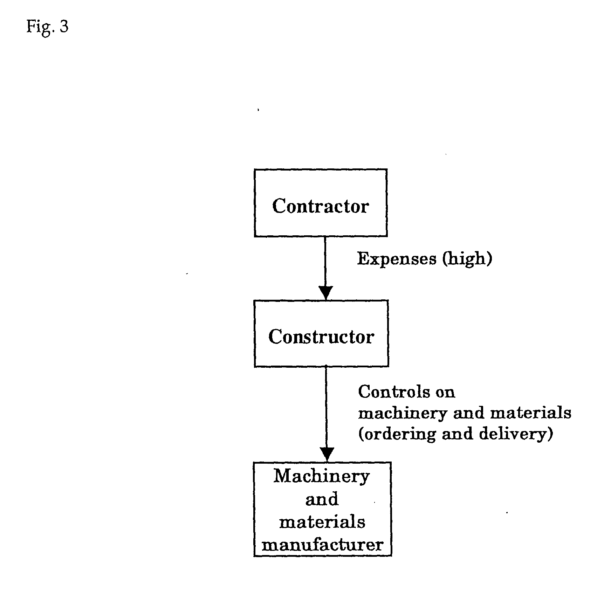

Fig. 3 is a conceptual diagram to illustrate a case where a contractor makes a constructor perform the controls on machinery and materials control operations by paying considerable expenses to the constructor.

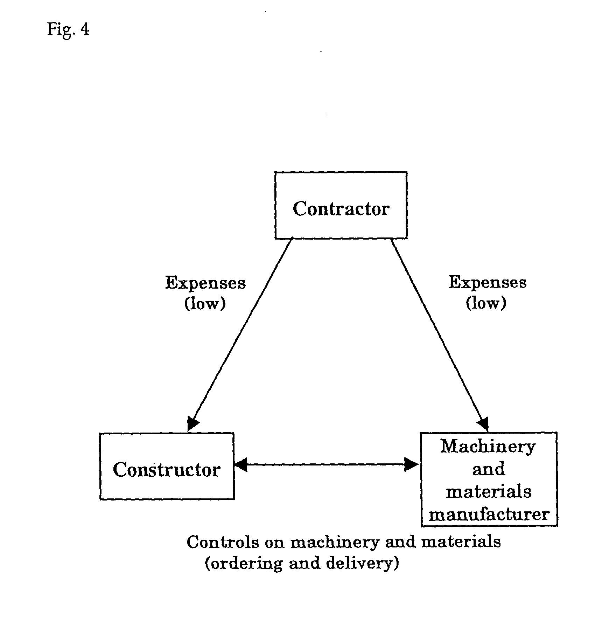

Fig. 4 is a conceptual diagram to illustrate a case where a contractor makes both a machinery and materials manufacturer and a constructor perform proportional controls to the paying below on machinery and materials by paying expenses to both of them.

### DETAILED DESCRIPTION OF THE INVENTION

Modes for carrying out the present invention are hereinafter described in detail.
(Outline of the integrated control system for information on machinery and materials):

An integrated control system for information on machinery and materials by which a machinery and materials controller performs integrated control for information on machinery and materials in construction works, wherein: the integrated control is performed by an integrated machinery and materials information control equipment; and the machinery and materials controller can receive and/or provide information on orders, delivery, stock and shipment of machinery and materials, and specify the placement of orders for and delivery of machinery and materials, by means of said equipment. That is, information is consistently and intensively received from and provided to related organization by the machinery and materials controller as centered.

For example, as is shown in Fig. 1, an embodiment of the integrated control system for information on machinery and materials according to the present invention comprises: integrated machinery and materials information control equipment A as installed at the machinery and materials controller's location; the contractor's equipment B as installed at the contractor's location; the machinery and materials manufacturer's equipment C1 to Cn as installed at each machinery and materials manufacturer's location; the warehouse's equipment D as installed in the warehouse; the constructor's equipment E1 to En as installed at each constructor's location; an electrical communication channel b which enables to communicate between the integrated machinery and materials information control equipment A and the contractor's equipment B; electrical communication channels c1 to cn which enable to communicate between the integrated machinery and materials information control equipment A and the manufacturer's equipment C1 to Cn; an electrical communication channel d which enables to communicate between the integrated machinery and materials information control equipment A and the warehouse's equipment D; and electrical communication channels el to en which enable to communicate between the integrated machinery and materials information control equipment A and the constructor's equipment E1 to En. And it is the information operation equipment F of Fig. 1 which includes all the above equipment.

Incidentally, Fig. 1 shows an example comprising one contractor and one warehouse, and one or more machinery and materials manufacturers and one or more constructors. However, there may be two or more contractors and two or more warehouses, and further, there may be plural equipment in one of organizations (the contractor, the machinery and materials manufacturer, the constructor, the warehouse).

Moreover, the above-mentioned electrical communication channels are those which are used to transmit information and typified by the Internet, and may be public switched network like telephone lines, or channels for the exclusive use of network.

### (Integrated machinery and materials information control equipment A):

The arrangement of the integrated machinery and materials information control equipment A is not particularly limited if the equipment A possesses hardware resources that are capable of integrated control for information. For example, illustrated by Fig. 1, the integrated machinery and materials information control equipment A comprises: a computer A10 for integrated control; transmission apparatus A11 for electrical communication channels to connect the computer A10 to the electrical communication channel b; transmission apparatus A21 to A2n for electrical communication channels to connect the computer A10 to the electrical communication channels cl to cn; transmission apparatus A31 for electrical communication channels to connect the computer A10 to the electrical communication channel d; and transmission apparatus A41 to A4n for electrical communication channels to connect the computer A10 to the electrical communication channels el to en. Moreover, it is possible for another related organization to connect to the computer A10 through the electrical communication channels as the need arises. In addition, it is also possible to combine the computer A10 with each transmission apparatus for electrical communication channels to form them into one body.

Incidentally, the "computer" herein is what is commonly called computer, and means hardware resources that are capable of storing, receiving, providing, controlling and processing information in response to external commands. It is also to possible for the computer to possess a function as a terminal.

In addition, the transmission apparatus for electrical communication channels is exemplified by communication modems and terminal adapters.

One of features of the system according to the present invention is that the system comprises the integrated machinery and materials information control equipment A. That is, as is shown in Fig. 1, an information network is established around the machinery and materials controller (the integrated machinery and materials information control equipment A), and this network enables the machinery and materials controller (the integrated machinery and materials information control equipment A) to constantly perform consistent, unitary, and integrated control for information on machinery and materials. Therefore, as is hereinafter described, the above-mentioned system greatly can reduce operations of controls, and further, enables quickly and consistently to order and delivery, in organization such as contractors, machinery and materials manufacturers, and constructors.

### (Contractor's equipment B):

The arrangement of the contractor's equipment B is not particularly limited if the equipment B possesses hardware resources that are capable of information processing. For example, illustrated by Fig. 1, the equipment B comprises: a computer B10 for the contractor's control; and transmission apparatus B11 for electrical communication channels to connect the computer B10 to the electrical communication channel b. In addition, it is also possible to combine the computer B10 with the transmission apparatus B11 to form them into one body.

### (Manufacturer's equipment C1 to Cn):

The arrangement of the manufacturer's equipment C1 to Cn is not particularly limited if the equipment C1 to Cn possesses hardware resources that are capable of information processing. For example, illustrated by Fig. 1, the equipment C1 to Cn comprises: computers C10 to Cn0 respectively for the manufacturer's control; and transmission apparatus C11 to Cn1 respectively for electrical communication channels to connect the computers C10 to Cn0 to the electrical communication channels c1 to cn respectively. In addition, it is also possible to combine the computers C10 to Cn0 with the transmission apparatus C11 to Cn1 to form them into one body.

Incidentally, the "n", as herein referred to, denotes an integer of not smaller than 1, and means that there may be plural machinery and materials manufacturers that can receive and provide information with the machinery and materials controller.

### (Warehouse's equipment D):

The arrangement of the warehouse's equipment D is not particularly limited if the equipment D possesses hardware resources that are capable of information processing. For example, illustrated by Fig. 1, the equipment D comprises: a computer D10 for the warehouse's side control; and transmission apparatus D11 for electrical communication channels to connect the computer D10 to the electrical communication channel d. In addition, it is also possible to combine the computer D10 with the transmission apparatus D11 to form them into one body.

### (Constructor's equipment E1 to En):

The arrangement of the constructor's equipment E1 to En is not particularly limited if the equipment E1 to En possesses hardware resources that are capable of information processing. For example, illustrated by Fig. 1, the equipment E1 to En comprises: computers E10 to En0 respectively for the constructor's control; and transmission apparatus E11 to En1 respectively for electrical communication channels to connect the computers E10 to En0 to the electrical communication channels e1 to en respectively. In addition, it is also possible to combine the computers E10 to En0 with the transmission apparatus E11 to En1 to form them into one body.

Incidentally, the "n", as herein referred to, denotes an integer of not smaller than 1, and means that there may be plural constructors that can receive and provide information with the machinery and materials controller.

### (Information operation equipment F):

The information operation equipment as referred to in the present invention means the entire equipment for operating the system according to the present invention and, for example, as is shown in Fig. 1, includes the integrated machinery and materials information control equipment A, the contractor's equipment B, the manufacturer's equipment C1 to Cn, the warehouse's equipment D and the constructor's equipment E1 to En. For example, it is possible for this information operation equipment F to store information on orders, delivery, stock and shipment of machinery and materials dispersedly into the integrated machinery and materials information control equipment A, the contractor's equipment B, the manufacturer's equipment C1 to Cn, the warehouse's equipment D and the constructor's equipment E1 to En, or to store these pieces of information in concentration into the integrated machinery and materials information control equipment A. And these pieces of information can be read and rewritten through an input means which can communicate with the integrated machinery and materials information control equipment A, and the access to the integrated machinery and materials information control equipment A enables to quickly receive and/or provide information on orders, delivery, stock and shipment of machinery and materials, and further, to specify the placement of orders for and delivery of machinery and materials quickly and with good timing.

### (Functions of integrated machinery and materials information control system):

Hereinafter, the functions of the integrated control system for information on machinery and materials according to the present invention are illustrated by an example in which this system comprises: the integrated machinery and materials information control equipment A as installed at the machinery and materials controller's location; the contractor's equipment B as installed at the contractor's location; the machinery and materials manufacturer's equipment C1 as installed at the machinery and materials manufacturer's location; the warehouse's equipment D as installed in the warehouse; and the constructor's equipment El as installed at the constructor's location. However, the functions of the system according to the present invention are not limited to this example.
(1) First, the contractor provides information on a construction plan to the machinery and materials controller. Usually, this information is provided in writing (e.g. facsimile). However, it is possible to provide the information by utilizing Internet (e.g. e-mail, writing onto home pages).
(2) The machinery and materials controller which has received the information on the construction plan from the contractor inputs requirements into the computer A10 for integrated control on the basis of this information. Specifically, the case of inputting onto home pages for integrated control being operated on the computer A10 is general. This case of using the home pages for integrated control is described below. Incidentally, information on machinery and materials such as information on orders, delivery, stock and shipment of machinery and materials is published on the above-mentioned home pages for integrated control. In addition, the contractor, the machinery and materials manufacturer, the warehouse, and the constructor can receive and/or provide the above-mentioned information by connecting the contractor's equipment B, the manufacturer's equipment C1, the warehouse's equipment D and the constructor's equipment E1 respectively to the integrated machinery and materials information control equipment A (computer A10 for integrated control). However, in general, such as the contractor that can connect to and communicate with the integrated machinery and materials information control equipment A (computer A10 for integrated control) are limited to those who have been given access privileges such as those who possess passwords issued by the machinery and materials controller. Incidentally, the machinery and materials controller further can limit the receiving and providing of information individually about the contractor, the machinery and materials manufacturer, the warehouse and the constructor by operating the functions of the integrated machinery and materials information control equipment A. This limitation, for example, can also be made individually among the machinery and materials manufacturers C1 to Cn.
(3) Next, the machinery and materials controller places an order with the machinery and materials manufacturer for necessary machinery and materials on the basis of the construction plan. For specific example, the controller inputs the details of the order (e.g. type, quantity and delivery time) onto the above-mentioned home pages for integrated control, and further, notifies the details of the order by means such as e-mail. The machinery and materials manufacturer who has received the notice of the order confirms the details of the order as input onto the above-mentioned home pages, and then starts to proceed with the arrangements for the order as well as inputs information regarding delivery time (e.g. delivery schedule) onto the above-mentioned home pages using the manufacturer's equipment C1 (computer C10 for the manufacturer's control). Incidentally, it is also possible for the machinery and materials manufacturer to change the above-input delivery time information later.
   As to the system according to the present invention, the machinery and materials controller can handle ordering operations for machinery and materials integratedly and consistently. Therefore, for example, the machinery and materials controller can select the most suitable order receiver for the current requirements from among plural machinery and materials manufacturers that can receive and provide information with the integrated machinery and materials information control equipment A (computer A10 for integrated control) of the machinery and materials controller. That is, the machinery and materials manufacturer whose delivery time of needed machinery and materials is the earliest can be selected, and further, different machinery and materials manufacturers can be selected according to the sorts of the machinery and materials. In addition, the machinery and materials manufacturer who can receive and provide information with the integrated machinery and materials information control equipment A (computer A10 for integrated control) can constantly obtain in real time the information being displayed on the above-mentioned home pages, therefore this machinery and materials manufacturer can also beforehand get hold of information on orders and can thereby smooth implementation of operations.
(4) The machinery and materials manufacturer, who has received order instructions, ships the ordered machinery and materials to the warehouse by the appointed date of delivery. The warehouse has the warehouse's equipment D (computer D10 for the warehouse's side control), and its connection to the integrated machinery and materials information control equipment A (computer A10 for integrated control) through electrical communication channels can provide such as information on stock levels of the warehouse to the machinery and materials controller. Specifically, inputting the information on the stock levels onto the above-mentioned home pages enables the integrated machinery and materials information control equipment A (computer A10 for integrated control) to constantly control the information on the stock levels and further enables related organs, which is connectable to the integrated machinery and materials information control equipment A (computer A10 for integrated control), to always receive such information in real time.
   In addition, because the control of such as information on stock levels of the warehouse can integratedly be performed by the machinery and materials controller, it becomes easy to advance or adjust the appointed date of delivery with utilizing spare stocks. Moreover, for example, even if the construction plan is suddenly discontinued, storing the related materials as spare stock in the warehouse enables to later utilize them and to provide convenience to related organs such as contractors.
   Furthermore, for example, the presence of the warehouse that can be integratedly controlled enables such operations as to assemble necessary equipment for a construction site in the warehouse, and further, to incorporate necessary parts. As a result, operations at the construction site can be simplified and quickened, and their costs can be reduced. In a specific example, the assemblage of a cubicle for radio station construction and the incorporation of necessary parts are beforehand carried out in the warehouse.
(5) The constructor requests the machinery and materials controller to bring machinery and materials necessary for construction to a construction site on the basis of the construction plan. Specifically, the constructor inputs the details of the bringing-in (e.g. type, quantity and delivery time) onto the above-mentioned home pages for integrated control, and further, notifies the bringing-in request by means such as e-mail. The machinery and materials controller who has received the notice of the bringing-in request judges the current overall status by taking the details of the bringing-in on the above-mentioned home pages and the information on stock levels into consideration, and then provides the constructor with information on the appointed date of delivery (e.g. delivery schedule) by inputting it onto the above-mentioned home pages.
(6) The machinery and materials controller gives the warehouse instructions to deliver machinery and materials necessary for a construction site (also including such as equipment as already obtained by assembling and incorporating the machinery and materials in the warehouse) on the basis of the above bringing-in request from the constructor and the construction plan. For specific example, the controller inputs the details of the delivery (e.g. type, quantity and appointed date of delivery) onto the above-mentioned home pages for integrated control, and further, notifies the details of the delivery by means such as e-mail. The warehouse that has received the notice of the delivery confirms the details of the delivery as input onto the above-mentioned home pages, and then starts to proceed with the arrangements for the delivery as well as inputs information on the appointed date of delivery (delivery schedule) onto the above-mentioned home pages using the warehouse's equipment D (computer D10 for the warehouse's side control). Incidentally, it is also possible for the warehouse to change the above-input information on the appointed date of delivery later.
(7) Incidentally, the contractor can obtain information on machinery and materials such as information on orders, delivery, stock and shipment of machinery and materials in real time and can constantly get hold of the progress conditions of operations, by connecting the contractor's equipment B (computer B10 for the contractor's control) to the integrated machinery and materials information control equipment A (computer A10 for integrated control) through electrical communication channels. In addition, even if the plan is changed according to circumstances, the provision of such information to the integrated machinery and materials information control equipment A (computer A10 for integrated control) facilitates adjustments with all related organizations.
(8) In addition, construction works, particularly, construction works for radio stations, need short-term completion. Therefore, there are many cases where machinery and materials must be arranged beforehand according to construction plans. However, if the construction plan is changed or reduced, there is a risk that the beforehand arranged machinery and materials might remain as bad stock. The integrated machinery and materials information control system according to the present invention enables to minimize this risk by obtaining information on machinery and materials such as information on orders, delivery, stock and shipment of machinery and materials unitarily and in real time and by constantly getting hold of the progress of the construction works, therefore the organization such as the contractor, the machinery and materials manufacturer, etc. can concentrate on the construction works without anxiety.

### (Effects and Advantages of the Invention):

The integrated control system for information on machinery and materials according to the present invention greatly reduces control operations by such as contractors and machinery and materials manufacturers regarding control of information on machinery and materials in construction works, and therefore enables to carry out the construction works at a low cost, and further, enables quick and consistent order and delivery.

Various details of the invention may be changed without departing from its spirit not its scope. Furthermore, the foregoing description of the modes for carrying out the present invention is provided for the purpose of illustration only, and not for the purpose of limiting the invention as defined by the appended claims and their equivalents.

## Claims

1. An integrated control system for information on machinery and materials by which a machinery and materials controller performs integrated control for information on machinery and materials in construction works, wherein:
said integrated control is performed by an integrated machinery and materials information control equipment; and
said machinery and materials controller can receive and/or provide information on orders, delivery, stock and shipment of machinery and materials, and specify the placement of orders for and delivery of machinery and materials, by means of said equipment.

2. An integrated control system for information on machinery and materials according to claim 1, wherein contractor's equipment can communicate with said integrated machinery and materials information control equipment through electrical communication channels.

3. An integrated control system for information on machinery and materials according to claim 2, wherein the information on machinery and materials can be provided and received between the contractor's equipment and the integrated machinery and materials information control equipment.

4. An integrated control system for information on machinery and materials according to any one of claims 1 to 3, wherein machinery and materials manufacturer's equipment can communicate with said integrated machinery and materials information control equipment through electrical communication channels.

5. An integrated control system for information on machinery and materials according to claim 4, wherein the information on machinery and materials can be provided and received between the machinery and materials manufacturer's equipment and the integrated machinery and materials information control equipment.

6. An integrated control system for information on machinery and materials according to any one of claims 1 to 5, wherein warehouse's equipment can communicate with said integrated machinery and materials information control equipment through electrical communication channels.

7. An integrated control system for information on machinery and materials according to claim 6, wherein the information on machinery and materials can be provided and received between the warehouse's equipment and the integrated machinery and materials information control equipment.

8. An integrated control system for information on machinery and materials according to any one of claims 1 to 7, wherein constructor's equipment can communicate with said integrated machinery and materials information control equipment through electrical communication channels.

9. An integrated control system for information on machinery and materials according to claim 8, wherein the information on machinery and materials can be provided and received between the constructor's equipment and the integrated machinery and materials information control equipment.

10. An integrated control system for information on machinery and materials according to any one of claims 1 to 9, wherein:
said integrated control is carried out by information operation equipment having said integrated machinery and materials information control equipment;
said information operation equipment stores information on orders, delivery, stock and shipment of machinery and materials wherein these pieces of information can be read and rewritten through an input means which can communicate with the integrated machinery and materials information control equipment; and
said machinery and materials controller can communication with said integrated machinery and materials information control equipment, and receive and/or provide information on orders, delivery, stock and shipment of machinery and materials, and further, specify the placement of orders for and delivery of machinery and materials.

11. An integrated control system for information on machinery and materials by which a machinery and materials controller performs integrated control for information on machinery and materials in construction works, wherein:
said machinery and materials controller can receive and/or provide information on orders, delivery, stock and shipment of machinery and materials, and further, specifies the placement of orders for and delivery of machinery and materials.

12. An integrated control system for information on machinery and materials according to claim 11, wherein the machinery and materials controller can receive and provide said information on machinery and materials individually with the contractor, the machinery and materials manufacturer, the warehouse and the constructor to which the machinery and materials controller allows to access said information on machinery and materials.

13. An integrated control system for information on machinery and materials according to any one of claims 1 to 12, wherein said information on machinery and materials is received and provided through an Internet.

14. An integrated control system for information on machinery and materials according to any one of claims 1 to 13, which is utilized for construction of a radio station.
